# EUROPEAN PATENT APPLICATION

(11) **EP 4 206 486 A1**
(43) Date of publication of application: **05.07.2023**
(21) Application number: 21861532.6
(22) Date of filing: 24.08.2021
(51) Int. Cl.: F16D 65/097

(54) **DISC BRAKE DEVICE**

(30) Priority: 25.08.2020 JP 2020141377
(71) Applicant: Hitachi Astemo, Ltd., Ibaraki 312-8503 (JP)
(72) Inventor: ATSUTA, Daiki, Hitachinaka-shi, Ibaraki 312-8503 (JP)
(74) Representative: Dehns
(86) International application number: PCT/JP2021/030924
(87) International publication number: WO 2022/045107

(57) **Abstract**

A retainer (72) of a disc brake device (10) comprises: abutment portions (72b, 72f) for pressing a pair of brake pads (48L, 48R) inward in the radial direction of a brake disc (16); connection portions (72c, 72e) connected to the abutment portions (72b, 72f); and widened portions (72g, 72h) provided in the connection portions (72c, 72e) and alleviating stress concentration at the connection portions (72c, 72e) by being formed to be wider in the axial direction (W) of the brake disc (16) than any other position in the connection portions (72c, 72e).

## Description

### Technical Field

The present invention relates to a disc brake device.

### Background Art

In the related art, in a disc brake device, a pair of brake pads accommodated in a brake caliper clamp a brake disc. Accordingly, the pair of brake pads brake the brake disc. JP2004-183904A discloses a disc brake device mounted on a vehicle such as an automobile, a motorcycle, or a motor tricycle. In this disc brake device, the pair of brake pads are pressed inward in a radial direction of the brake disc by a pad spring (retainer). Accordingly, the pair of brake pads are held by the brake caliper.

### Summary of Invention

The pad spring described above includes a plurality of abutment portions and a connection portion. The plurality of abutment portions press the pair of brake pads inward in a radial direction of the brake disc. The connection portion connects the plurality of abutment portions. A width in an axial direction of the brake disc in the connection portion is narrower than a width in the axial direction of the brake disc in the plurality of abutment portions. Accordingly, stress concentration may occur in the connection portion. In this case, it is conceivable to change a load at a stress concentration portion in the connection portion by changing a plate thickness, a material, or the like of the pad spring. Accordingly, the stress concentration in the connection portion is dispersed. However, such a method increases a cost.

In view of the above problem, it is desired that a load at the stress concentration portion can be changed to disperse the stress concentration without changing a plate thickness, a material, or the like of a retainer and without increasing a cost.

An object of the invention is to solve the problem described above.

A disc brake device according to one aspect of the invention includes: a brake disc; a brake caliper provided to straddle the brake disc; a pair of brake pads accommodated in the brake caliper and configured to clamp the brake disc; and a retainer provided for the brake caliper and configured to abut against the pair of brake pads (48L, 48R) in order to cause the pair of brake pads to be held by the brake caliper. The retainer includes: an abutment portion configured to press the pair of brake pads inward in a radial direction of the brake disc by abutting against the pair of brake pads; a connection portion connected to the abutment portion; and a widened portion provided in the connection portion and configured to alleviate stress concentration at the connection portion by being formed to be wider in an axial direction of the brake disc than other portion in the connection portion.

According to this configuration, by providing the widened portion in the connection portion, the load at the stress concentration portion in the connection portions can be changed to disperse the stress concentration without changing a plate thickness, a material, or the like of the retainer and without increasing the cost.

When an inlet side of the brake caliper in a rotation direction of the brake disc is a disc rotation-in side and an outlet side of the brake caliper in the rotation direction is a disc rotation-out side, the abutment portion is provided to press the pair of brake pads inward in the radial direction and toward the disc rotation-out side, the connection portion is connected to the disc rotation-in side of the abutment portion, and the widened portion is formed adjacent to the abutment portion at the connection portion.

According to this configuration, the widened portion is formed adjacent to the abutment portion. Accordingly, when the pair of brake pads are pressed by the abutment portions inward in the radial direction and toward the disc rotation-out side, generation of abnormal noise such as "squeal" generated in sliding portions between the pair of brake pads and the brake disc and generation of uneven wear at the pair of brake pads are prevented. In addition, the stress concentration can also be dispersed.

The retainer includes a plurality of the abutment portions provided at any interval in the rotation direction, and a plurality of the connection portions connected to the plurality of the abutment portions in the rotation direction and provided with the widened portions, and the widened portion on the disc rotation-in side of the plurality of widened portions is wider in the axial direction than the widened portion on the disc rotation-out side.

According to this configuration, the plurality of abutment portions are connected by the plurality of connection portions, and the widened portions are formed in the plurality of connection portions, respectively. Accordingly, when the pair of brake pads are pressed inward in the radial direction and toward the disc rotation-out side by the plurality of abutment portions, stresses of different magnitudes generated in the plurality of connection portions can be efficiently dispersed.

In addition, the abutment portion on the disc rotation-in side presses the pair of brake pads from the disc rotation-in side toward the disc rotation-out side. Therefore, the connection portion connected to the disc rotation-in side with respect to the abutment portion on the disc rotation-in side has a larger stress concentration than the other connection portions. Therefore, in this configuration, a width in the axial direction of the widened portion on the disc rotation-in side is made wider than a width in the axial direction of the widened portion on the disc rotation-out side. Accordingly, it is possible to effectively disperse the stress concentration generated in the connection portion on the disc rotation-in side.

The widened portion is provided with any mark.

According to this configuration, it is possible to suitably provide a mark such as an assembling direction of the retainer with respect to the brake caliper.

### Brief Description of Drawings

FIG. 1 is a right side view of a front wheel portion of a two-wheeled vehicle on which a disc brake device according to the present embodiment is mounted.
FIG. 2 is a rear view of the disc brake device.
FIG. 3 is a partial rear view of the disc brake device.
FIG. 4 is a partial rear view of the disc brake device.
FIG. 5 is a cross-sectional view taken along line V-V of FIG. 2.

### Description of Embodiments

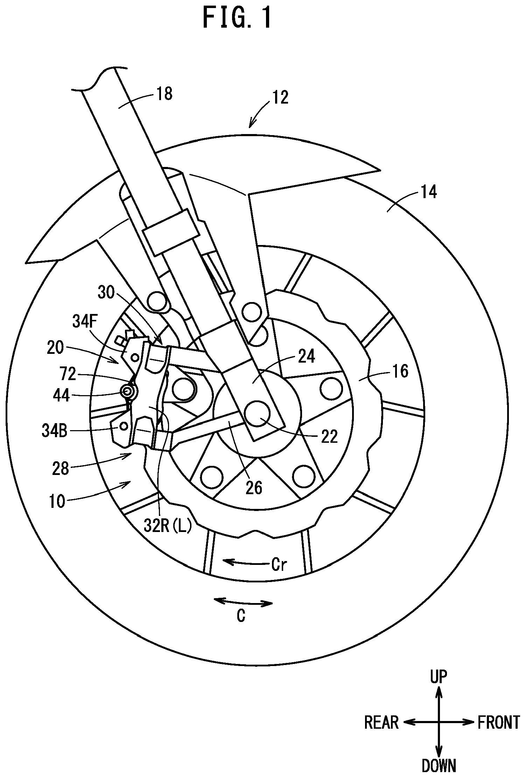

As shown in FIG. 1, a disc brake device 10 according to the present embodiment is mounted on a vehicle, as a brake device for a wheel. FIG. 1 shows, as an example, a case where the disc brake device 10 is applied to a brake device for a front wheel 14 of a two-wheeled vehicle 12. In addition, in the description of the present embodiment, a front and rear direction, a left and right direction, and an up and down direction will be described, with a traveling direction of the two-wheeled vehicle 12 (a right direction in FIG. 1) being defined as a front direction. The disc brake device 10 is not limited to the example in FIG. 1. The disc brake device 10 is provided on a wheel (the front wheel 14 or rear wheel) of various vehicles such as a one-wheeled vehicle, a three-wheeled vehicle, and a four-wheeled vehicle.

In the following description, elements on a left side among elements of the disc brake device 10 may be described with a letter "L" following a reference numeral. In addition, elements on a right side may be described with a letter "R" following a reference numeral. Further, elements on a front side may be described with a letter "F" following a reference numeral. Furthermore, elements on a rear side may be described with a letter "B" following a reference numeral.

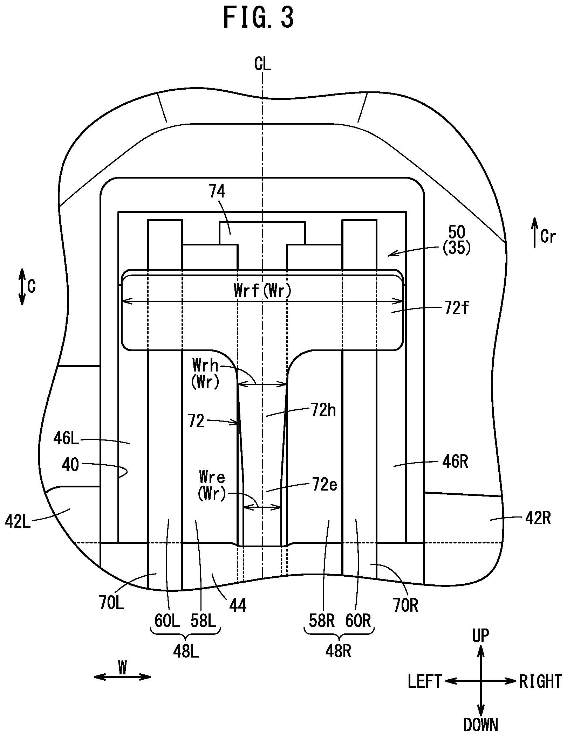

The disc brake device 10 includes a brake disc 16. The brake disc 16 is an annular plate-shaped member made of metal. The brake disc 16 is provided on the right side of the front wheel 14. The brake disc 16 is connected to the front wheel 14 so as to be substantially coaxial with an axle 22 of the front wheel 14. Therefore, the brake disc 16 rotates integrally with the front wheel 14. In addition, the disc brake device 10 further includes a brake caliper 20. The brake caliper 20 is attached to a front fork 18 on the right side of the front wheel 14. An axle support portion 24 is provided at a distal end portion of the front fork 18. The axle support portion 24 pivotally supports the axle 22. A bracket 26 extending to a right rear side of the front wheel 14 is connected to the axle support portion 24. As shown in FIGS. 1 to 5, the brake caliper 20 is supported by the bracket 26 so as to straddle the brake disc 16.

In FIGS. 1 to 5, a double-headed arrow of C indicates a circumferential direction of the front wheel 14 and the brake disc 16. In addition, an arrow of Cr indicates a rotation direction of the front wheel 14 and the brake disc 16. One end portion side (one end portion side in a rotational direction Cr) of the brake caliper 20 is referred to as a disc rotation-in side 28. The other end portion side (the other end portion side in the rotational direction Cr) of the brake caliper 20 is referred to as a disc rotation-out side 30. The disc rotation-in side 28 is a side (inlet side) on which the brake disc 16 enters the brake caliper 20 during forward movement of the two-wheeled vehicle 12. That is, when the front wheel 14 rotates during the forward movement of the two-wheeled vehicle 12, the brake disc 16 enters the disc rotation-in side 28. The disc rotation-out side 30 is a side (outlet side) on which the brake disc 16 comes out from the brake caliper 20 during the forward movement of the two-wheeled vehicle 12. That is, when the front wheel 14 rotates during the forward movement of the two-wheeled vehicle 12, the brake disc 16 comes out from the disc rotation-out side 30.

The brake caliper 20 is supported by the bracket 26 on the right rear side of the front wheel 14. The brake caliper 20 extends substantially in a vertical direction along the brake disc 16. Since the brake caliper 20 is located near a rear part of the front wheel 14, a lower side of the brake caliper 20 is the disc rotation-in side 28. In addition, an upper side of the brake caliper 20 is the disc rotation-out side 30. For example, when the brake caliper 20 is disposed on a right front side of the front wheel 14, the lower side of the brake caliper 20 is the disc rotation-out side 30. In addition, in this case, the upper side of the brake caliper 20 is the disc rotation-in side 28. In the following description, a case where the brake caliper 20 is disposed as shown in FIGS. 1, 2, and 5 will be described.

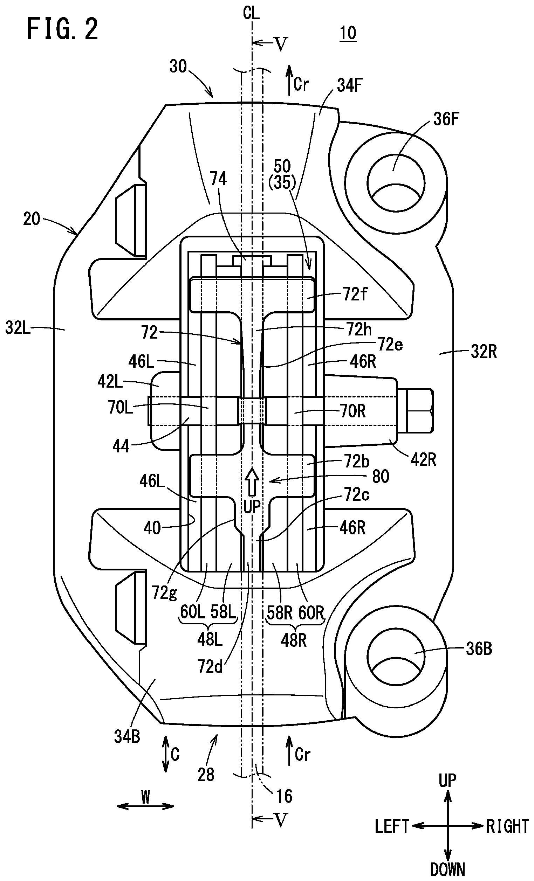

As shown in FIGS. 1 to 5, the brake caliper 20 includes a pair of acting portions 32L, 32R, one bridge portion 34B, and the other bridge portion 34F. As shown in FIG. 2, the brake disc 16 is disposed on a center line CL of the brake caliper 20. The pair of acting portions 32L, 32R are disposed on both left and right sides with the brake disc 16 interposed therebetween. The one bridge portion 34B connects the pair of acting portions 32L, 32R on an outer side in the radial direction of the brake disc 16. The one bridge portion 34B connects the pair of acting portions 32L, 32R on the disc rotation-in side 28. The other bridge portion 34F connects the pair of acting portions 32L, 32R on the outer side in the radial direction of the brake disc 16. The other bridge portion 34F connects the pair of acting portions 32L, 32R on the disc rotation-out side 30.

The pair of acting portions 32L, 32R extend in a substantially arc shape along the brake disc 16. Therefore, the brake disc 16 enters a gap 35 between the pair of acting portions 32L, 32R. The brake disc 16 rotates in the rotation direction Cr at an intermediate position in a left-right direction of the gap 35. The left-right direction of the gap 35 is also an axial direction of the brake disc 16, an axial direction of the front wheel 14, and a vehicle width direction of the two-wheeled vehicle 12. In addition, the intermediate position is located on the center line CL of the brake caliper 20.

Insertion holes 36B, 36F are formed in the disc rotation-in side 28 and the disc rotation-out side 30 of the acting portion 32R on the right side, respectively. The acting portion 32R on the right side is fixed to the bracket 26 by two attachment bolts (not shown) inserted through the insertion holes 36B, 36F.

The bridge portions 34B, 34F protrude from the pair of acting portions 32L, 32R outward in the radial direction of the brake disc 16. In addition, the bridge portions 34B, 34F connect the pair of acting portions 32L, 32R. Therefore, as shown in FIGS. 2 to 5, the pair of acting portions 32L, 32R and the two bridge portions 34B, 34F form an opening 40 that opens rearward.

As shown in FIGS. 2, 3, and 5, protruding portions 42L, 42R that swell rearward are formed on the pair of acting portions 32L, 32R. The two protruding portions 42L, 42R are formed at central portions (central portions in the circumferential direction C) of the pair of acting portions 32L, 32R. In other words, the two protruding portions 42L, 42R are formed at intermediate portions of the two bridge portions 34B, 34F. A hanger pin 44 extending in the left-right direction penetrates the two protruding portions 42L, 42R.

As shown in FIGS. 2 to 5, the disc brake device 10 further includes a plurality of pistons 46L, 46R and a pair of brake pads 48L, 48R. The plurality of pistons 46L, 46R and the pair of brake pads 48L, 48R are accommodated in the brake caliper 20. That is, the gap 35 between the pair of acting portions 32L, 32R forms a brake pad accommodation chamber 50. The pair of brake pads 48L, 48R are accommodated in the brake pad accommodation chamber 50. The plurality of pistons 46L, 46R are accommodated in the pair of acting portions 32L, 32R.

Specifically, two cylinder holes (not shown) are formed in the acting portion 32L on the left side. The two cylinder holes extend in the left-right direction. The two cylinder holes open toward the brake disc 16. One of the cylinder holes is formed between the protruding portion 42L and the one bridge portion 34B. The other cylinder hole is formed between the protruding portion 42L and the other bridge portion 34F. That is, the two cylinder holes are respectively formed on a front side and a rear side of the acting portion 32L on the left side. The pistons 46L are respectively accommodated in the cylinder holes. A hydraulic chamber (not shown) is formed between the cylinder hole and the piston 46L.

Similarly, the two cylinder holes (not shown) are formed in the acting portion 32R on the right side. The two cylinder holes extend in the left-right direction. The two cylinder holes open toward the brake disc 16. One of the cylinder holes is formed between the protruding portion 42R and the one bridge portion 34B. The other cylinder hole is formed between the protruding portion 42R and the other bridge portion 34F. That is, the two cylinder holes are respectively formed on a front side and a rear side of the acting portion 32R on the right side. The pistons 46R are respectively accommodated in the cylinder holes. The hydraulic chamber (not shown) is formed between the cylinder hole and the piston 46R.

Accordingly, the brake caliper 20 is a four-pot caliper of an opposing piston type. The pair of brake pads 48L, 48R brake the brake disc 16 due to action of the pistons 46L, 46R. Therefore, the number of the pistons 46L, 46R accommodated in the brake caliper 20 may be any number.

The brake pad accommodation chamber 50 is formed by inner surfaces of the pair of acting portions 32L, 32R on a brake disc 16 side, inner surfaces of the two bridge portions 34B, 34F facing each other, and a bottom portion 56 of the brake caliper 20 on the inner side in the radial direction of the brake disc 16. The inner surfaces of the two bridge portions 34B, 34F facing each other are side surfaces orthogonal to the circumferential direction C and extending in the left-right direction. The bottom portion 56 of the brake caliper 20 is a portion extending from bottom portions of the pair of acting portions 32L, 32R (portions of the pair of acting portions 32L, 32R located on the inner side in the radial direction of the brake disc 16) toward the brake disc 16.

The pair of brake pads 48L, 48R include friction members 58L, 58R and rear plates 60L, 60R, respectively. Each of the friction members 58L, 58R has a contact surface (a side surface facing the brake disc 16) that is in contact with a side surface of the brake disc 16. Each of the friction members 58L and 58R extends in an arc shape along the circumferential direction C. The contact surface of each of the friction members 58L, 58R is in sliding contact with the brake disc 16. The rear plates 60L, 60R are attached to rear surfaces (side surfaces separated from the brake disc 16) opposite to the contact surfaces of the friction members 58L, 58R, respectively. Each of the rear plates 60L, 60R is a substantially arc-shaped metal plate. One surface of each of the rear plates 60L, 60R is attached to the rear surface of the respective one of the friction members 58L, 58R. The other surface of each of the rear plates 60L, 60R faces the respective one of the pistons 46L, 46R.

The bottom surface (surface on an inner side in the radial direction) of each of the rear plates 60L, 60R is in contact with the bottom portion 56 of the brake caliper 20. In addition, the side surface of each of the rear plates 60L, 60R on the disc rotation-in side 28 is contactable with the inner surface of the one bridge portion 34B. Further, the side surface of each of the rear plates 60L, 60R on the disc rotation-out side 30 is contactable with the inner surface of the other bridge portion 34F.

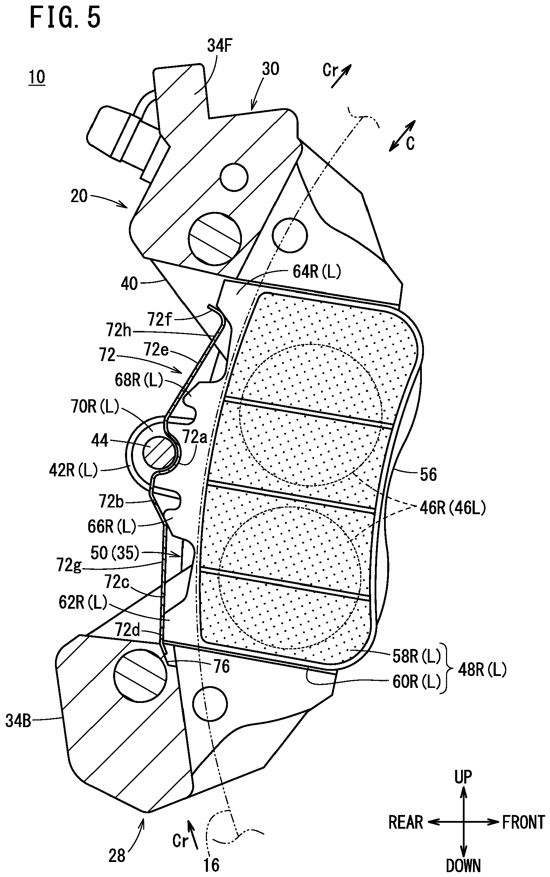

A plurality of protruding portions 62L, 62R, 64L, 64R, 66L, 66R, 68L, 68R are formed on the rear plates 60L, 60R (see FIG. 5). The plurality of protruding portions 62L, 62R, 64L, 64R, 66L, 66R, 68L, 68R are formed on rear surfaces (surfaces on an outer side in the radial direction) of the rear plates 60L, 60R. The plurality of protruding portions 62L, 62R, 64L, 64R, 66L, 66R, 68L, 68R protrude rearward of the brake disc 16 (outer side in the radial direction of the brake disc 16). In addition, the plurality of protruding portions 62L, 62R, 64L, 64R, 66L, 66R, 68L, 68R protrude rearward of the friction members 58L, 58R (outer side in the radial direction of the brake disc 16). As shown in FIGS. 2, 3, and 5, the protruding portions 70L, 70R are formed on central portions (central portions in the circumferential direction C) of the rear surfaces of the rear plates 60L, 60R. The protruding portions 70L, 70R correspond to the protruding portions 42L, 42R of the acting portions 32L, 32R. The hanger pin 44 penetrates each of the protruding portions 70L, 70R.

Specifically, the protruding portions 62L, 62R are located at ends of the rear plates 60L, 60R on the disc rotation-in side 28. The protruding portions 62L, 62R protrude from the rear surfaces of the rear plates 60L, 60R outward in the radial direction of the brake disc 16. Each of the protruding portions 62L, 62R is contactable with the inner surface of the one bridge portion 34B.

In addition, the protruding portions 64L, 64R are located at the ends of the rear plates 60L, 60R on the disc rotation-out side 30. The protruding portions 64L, 64R protrude from the rear surfaces of the rear plates 60L, 60R outward in the radial direction of the brake disc 16. Each of the protruding portions 64L, 64R is contactable with the inner surface of the other bridge portion 34F.

Further, the protruding portions 66L, 66R are located on the disc rotation-in side 28 (on an upstream side in the circumferential direction C and the rotational direction Cr) with respect to the protruding portions 70L, 70R at the centers of the rear plates 60L, 60R. The protruding portions 66L, 66R protrude from the rear surfaces of the rear plates 60L, 60R outward in the radial direction of the brake disc 16. A protruding amount of each of the protruding portions 66L, 66R outward in the radial direction of the brake disc 16 is smaller than a protruding amount of each of the protruding portions 70L, 70R outward in the radial direction of the brake disc 16. In addition, distal end surfaces (rear surfaces on the outer side in the radial direction) of the protruding portions 66L, 66R are inclined toward distal ends of the protruding portions 70L, 70R.

Furthermore, the protruding portions 68L, 68R are located on the disc rotation-out side 30 (on a downstream side in the circumferential direction C and the rotational direction Cr) with respect to the protruding portions 70L, 70R at the centers of the rear plates 60L, 60R. The protruding portions 68L, 68R protrude from the rear surfaces of the rear plates 60L, 60R outward in the radial direction of the brake disc 16. A protruding amount of each of the protruding portions 68L, 68R outward in the radial direction of the brake disc 16 is smaller than a protruding amount of each of the protruding portions 70L, 70R outward in the radial direction of the brake disc 16. In addition, distal end surfaces (rear surfaces on the outer side in the radial direction) of the protruding portions 68L, 68R are inclined toward distal ends of the protruding portions 70L, 70R.

Accordingly, the pair of brake pads 48L, 48R are located in the circumferential direction C by bringing the rear plates 60L, 60R (the protruding portions 62L, 62R, 64L, 64R) into surface contact with the inner surfaces of the two bridge portions 34B, 34F. In addition, in the pair of brake pads 48L, 48R, the rear plates 60L, 60R are in surface contact with the bottom portion 56 of the brake caliper 20. In addition, the rear plates 60L, 60R are pivotally supported by the hanger pin 44. Accordingly, the pair of brake pads 48L, 48R are located in the radial direction of the brake disc 16. Accordingly, the pair of brake pads 48L, 48R are accommodated in the brake pad accommodation chamber 50.

As shown in FIGS. 1 to 5, the brake caliper 20 further includes a retainer 72. The retainer 72 elastically biases the pair of brake pads 48L, 48R. The pair of brake pads 48L, 48R are held on the bottom portion 56 of the brake caliper 20 by a biasing force from the retainer 72. The retainer 72 is a plate spring member (pad spring) extending along the circumferential direction C. The retainer 72 covers a gap 74 between the friction members 58L, 58R on the outer side in the radial direction of the brake disc 16. Here, a width of the retainer 72 in the left-right direction (a width in the axial direction W which is a direction orthogonal to the center line CL) is denoted by Wr. In addition, in the following description, a width of each portion of the retainer 72 in the axial direction W may be described by adding lowercase alphabets following Wr.

The retainer 72 has an arc-shaped portion 72a. The arc-shaped portion 72a is locked to a central portion of the hanger pin 44. The hanger pin 44 locks the arc-shaped portion 72a at a portion of the hanger pin 44 on the inner side in the radial direction of the brake disc 16. The following elements are sequentially connected to a portion of the arc-shaped portion 72a on the disc rotation-in side 28.

An abutment portion 72b is connected to the arc-shaped portion 72a. The abutment portion 72b is located on the disc rotation-in side 28 with respect to the arc-shaped portion 72a. The abutment portion 72b is a widened portion (width Wrb) that is curved and abuts against the protruding portions 66L, 66R of the rear plates 60L, 60R.

A connection portion 72c is connected to the abutment portion 72b. The connection portion 72c is located on the disc rotation-in side 28 with respect to the abutment portion 72b. The connection portion 72c is formed in a flat plate shape. A width of the connection portion 72c is narrower than the width Wrb of the abutment portion 72b. Specifically, a portion of the connection portion 72c on the disc rotation-out side 30 is connected to the abutment portion 72b. The connection portion is a relatively wider widened portion 72g of the connection portion 72c. A width Wrc1 of the widened portion 72g is narrower than the width Wrb of the abutment portion 72b (Wrc1 < Wrb). In addition, a width Wrc2 of a portion of the connection portion 72c on the disc rotation-in side 28 is narrower than the width Wrc1 of the widened portion 72g (Wrc2 < Wrc1).

A rotation-in side end portion 72d is connected to the connection portion 72c. The rotation-in side end portion 72d is located on the disc rotation-in side 28 with respect to the connection portion 72c. A width Wrd of the rotation-in side end portion 72d is the width Wrd substantially the same as that of the portion of the connection portion 72c on the disc rotation-in side 28 (Wrc2 ≈ Wrd). A recessed portion 76 is formed in a central portion (a central portion in the axial direction W) of the inner surface of the one bridge portion 34B. The rotation-in side end portion 72d is locked to the recessed portion 76.

The following elements are sequentially connected to a portion of the arc-shaped portion 72a on the disc rotation-out side 30.

A connection portion 72e is connected to the arc-shaped portion 72a. The connection portion 72e is located on the disc rotation-out side 30 with respect to the arc-shaped portion 72a. The connection portion 72e is formed in a flat plate shape. A width Wre of the connection portion 72e is a width substantially the same as that of the arc-shaped portion 72a. An abutment portion 72f is connected to the connection portion 72e. The abutment portion 72f is located on the disc rotation-out side 30 with respect to the connection portion 72e. The abutment portion 72f is a widened portion that abuts against the protruding portions 64L, 64R of the rear plates 60L, 60R in a curved state. The abutment portion 72f is a rotation-out side end portion of the retainer 72. A width Wrf of the abutment portion 72f is substantially the same as the width Wrb of the abutment portion 72b (Wrf ≈ Wrb > Wre).

The abutment portion 72b of the retainer 72 abuts against the protruding portions 66L, 66R of the rear plates 60L, 60R. In addition, the abutment portion 72f of the retainer 72 abuts against the protruding portions 64L, 64R of the rear plates 60L, 60R. Accordingly, the pair of brake pads 48L, 48R are biased inward in the radial direction of the brake disc 16. In addition, the pair of brake pads 48L, 48R are also biased toward the disc rotation-out side 30. As a result, even if there is some backlash between the pair of brake pads 48L, 48R and the brake caliper 20, the pair of brake pads 48L, 48R accommodated in the brake pad accommodation chamber 50 can be held by the brake caliper 20.

When a driver of the two-wheeled vehicle 12 operates a brake lever (not shown) in a state where the front wheel 14 rotates in the rotation direction Cr, the pistons 46L, 46R move toward an inner side in the axial direction (toward a brake disc 16 side). When the pistons 46L, 46R move toward the inner side in the axial direction, the rear plates 60L, 60R constituting the pair of brake pads 48L, 48R are pressed. Accordingly, the friction members 58L, 58R connected to the rear plates 60L, 60R are pressed against the brake disc 16. As a result, the brake disc 16 and the front wheel 14 are braked by the pair of brake pads 48L, 48R.

In this case, the pair of brake pads 48L, 48R slide in the circumferential direction C (the rotation direction Cr) due to a rotational force of the brake disc 16. Accordingly, the protruding portions 64R, 64L of the rear plates 60R, 60L abut against the inner surface of the bridge portion 34F. Therefore, the inner surface of the bridge portion 34F functions as a receiving surface for receiving a torque acting on the pair of brake pads 48L, 48R.

As shown in FIG. 2, each of the connection portions 72c, 72e has a relatively narrow width in the axial direction W. Therefore, stress concentration may partially occur in the connection portions 72c, 72e. In this case, it is conceivable to change a plate thickness, a material, or the like of the retainer 72 to change a load at the stress concentration portions in the connection portions 72c, 72e. Accordingly, the stress concentration at the connection portions 72c, 72e is dispersed. However, this method is costly. Therefore, in the disc brake device 10 according to the present embodiment, the stress concentration is dispersed at low cost without changing the plate thickness, the material, and the like of the retainer 72. Therefore, in the disc brake device 10, the following characteristic configuration is adopted with respect to a structure of the retainer 72.

That is, as shown in FIGS. 2 to 4, the two connection portions 72c, 72e connected to the two abutment portions 72b, 72f are provided with the widened portions 72g, 72h. The two widened portions 72g, 72h are connected to the two abutment portions 72b, 72f. The two widened portions 72g, 72h are formed to be wider in the left-right direction (the axial direction W) than the other portions of the two connection portions 72c, 72e. By providing the two widened portions 72g, 72h, the stress concentration at the two connection portions 72c, 72e is alleviated.

Specifically, a portion of the connection portion 72c that is connected to the abutment portion 72b (a portion having the width Wrc1) is the widened portion 72g.

In addition, a portion of the connection portion 72e that is connected to the abutment portion 72f is formed in a tapered shape that gradually increases in width toward the abutment portion 72f. The taper-shaped portion (the portion connected to the abutment portion 72f) is the widened portion 72h having a width Wrh (Wrh > Wre).

Accordingly, the connection portion 72c is connected to the abutment portion 72b. In this case, the widened portion 72g is formed adjacent to the abutment portion 72b at the connection portion 72c. On the other hand, the connection portion 72e is connected to the abutment portion 72f. In this case, the widened portion 72h is formed adjacent to the abutment portion 72f at the connection portion 72e.

In addition, in the retainer 72, the plurality of abutment portions 72b, 72f are provided at any interval in the rotation direction Cr. Therefore, the plurality of connection portions 72c, 72e connect the abutment portions 72b, 72f in the rotation direction Cr. In this case, the width Wrc1 of the widened portion 72g of the connection portion 72c is wider in the left-right direction (the axial direction W) than the width Wrh of the widened portion 72h of the connection portion 72e (Wrc1 > Wrh).

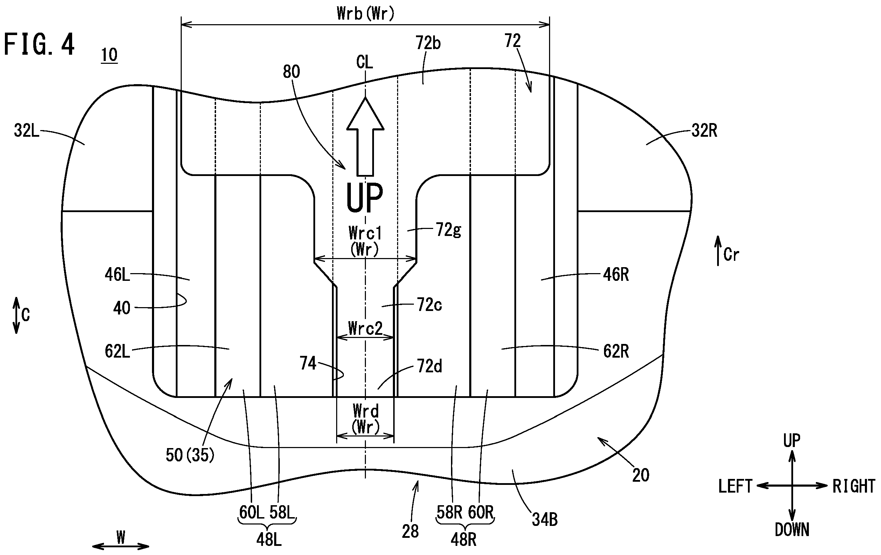

Moreover, any mark 80 is provided on a surface on the outer side in the radial direction of the wider widened portion 72g. In FIGS. 2 and 4, as an example, an arrow and a letter "UP" that indicate an assembling direction of the retainer 72 with respect to the brake caliper 20 are provided.

The invention that can be understood from the above embodiment will be described below.

A disc brake device (10) includes: a brake disc (16); a brake caliper (20) provided to straddle the brake disc (16); a pair of brake pads (48L, 48R) accommodated in the brake caliper (20) and configured to clamp the brake disc (16); and a retainer (72) provided for the brake caliper (20) and configured to abut against the pair of brake pads (48L, 48R) in order to cause the pair of brake pads (48L, 48R) to be held by the brake caliper (20). The retainer (72) includes: an abutment portion (72b, 72f) configured to press the pair of brake pads (48L, 48R) inward in a radial direction of the brake disc (16) by abutting against the pair of brake pads (48L, 48R); a connection portion (72c, 72e) connected to the abutment portion (72b, 72f); and a widened portion (72g, 72h) provided in the connection portion (72c, 72e) and configured to alleviate stress concentration at the connection portion (72c, 72e) by being formed to be wider in an axial direction (W) of the brake disc (16) than other portion in the connection portion (72c, 72e) .

According to this configuration, by providing the widened portion in the connection portion, the load at the stress concentration portion in the connection portions can be changed to disperse the stress concentration without changing a plate thickness, a material, or the like of the retainer and without increasing the cost.

When an inlet side of the brake caliper (20) in a rotation direction (Cr) of the brake disc (16) is a disc rotation-in side (28) and an outlet side of the brake caliper (20) in the rotation direction (Cr) is a disc rotation-out side (30), the abutment portion (72b, 72f) is provided to press the pair of brake pads (48L, 48R) inward in the radial direction and toward the disc rotation-out side (30). The connection portion (72c, 72e) is connected to the disc rotation-in side (28) of the abutment portion (72b, 72f), and the widened portion (72g, 72h) is formed adjacent to the abutment portion (72b, 72f) at the connection portion (72c, 72e).

According to this configuration, the widened portion is formed adjacent to the abutment portion. Accordingly, when the pair of brake pads are pressed by the abutment portions inward in the radial direction and toward the disc rotation-out side, generation of abnormal noise such as "squeal" generated in sliding portions between the pair of brake pads and the brake disc and generation of uneven wear at the pair of brake pads are prevented. In addition, the stress concentration can also be dispersed.

The retainer (72) includes a plurality of the abutment portions (72b, 72f) provided at any interval in the rotation direction (Cr), and a plurality of the connection portions (72c, 72e) connected to the plurality of the abutment portions (72b, 72f) in the rotation direction (Cr) and provided with the widened portions (72g, 72h). The widened portion (72g) on the disc rotation-in side (28) of the plurality of widened portions (72g, 72h) is wider in the axial direction (W) than the widened portion (72h) on the disc rotation-out side (30).

According to this configuration, the plurality of abutment portions are connected by the plurality of connection portions, and the widened portions are formed in the plurality of connection portions, respectively. Accordingly, when the pair of brake pads are pressed inward in the radial direction and toward the disc rotation-out side by the plurality of abutment portions, stresses of different magnitudes generated in the plurality of connection portions can be efficiently dispersed.

In addition, the abutment portion on the disc rotation-in side presses the pair of brake pads from the disc rotation-in side toward the disc rotation-out side. Therefore, the connection portion connected to the disc rotation-in side with respect to the abutment portion on the disc rotation-in side has a larger stress concentration than the other connection portions. Therefore, in this configuration, a width in the axial direction of the widened portion on the disc rotation-in side is made wider than a width in the axial direction of the widened portion on the disc rotation-out side. Accordingly, it is possible to effectively disperse the stress concentration generated in the connection portion on the disc rotation-in side.

The widened portion (72g, 72h) is provided with any mark (80).

According to this configuration, it is possible to suitably provide a mark such as an assembling direction of the retainer with respect to the brake caliper.

The invention is not limited to the embodiments described above, and various configurations can be adopted without departing from the gist of the invention.

## Claims

1. A disc brake device (10) comprising:
a brake disc (16);
a brake caliper (20) provided to straddle the brake disc (16);
a pair of brake pads (48L, 48R) accommodated in the brake caliper (20) and configured to clamp the brake disc (16); and
a retainer (72) provided for the brake caliper (20) and configured to abut against the pair of brake pads (48L, 48R) in order to cause the pair of brake pads (48L, 48R) to be held by the brake caliper (20), wherein
the retainer (72) includes:
an abutment portion (72b, 72f) configured to press the pair of brake pads (48L, 48R) inward in a radial direction of the brake disc (16) by abutting against the pair of brake pads (48L, 48R);
a connection portion (72c, 72e) connected to the abutment portion (72b, 72f); and
a widened portion (72g, 72h) provided in the connection portion (72c, 72e) and configured to alleviate stress concentration at the connection portion (72c, 72e) by being formed to be wider in an axial direction (W) of the brake disc (16) than other portion in the connection portion (72c, 72e).

2. The disc brake device (10) according to claim 1, wherein
when an inlet side of the brake caliper (20) in a rotation direction (Cr) of the brake disc (16) is a disc rotation-in side (28) and an outlet side of the brake caliper (20) in the rotation direction (Cr) is a disc rotation-out side (30), the abutment portion (72b, 72f) is provided to press the pair of brake pads (48L, 48R) inward in the radial direction and toward the disc rotation-out side (30),
the connection portion (72c, 72e) is connected to the disc rotation-in side (28) of the abutment portion (72b, 72f), and
the widened portion (72g, 72h) is formed adjacent to the abutment portion (72b, 72f) at the connection portion (72c, 72e).

3. The disc brake device (10) according to claim 2, wherein
the retainer (72) includes a plurality of the abutment portions (72b, 72f) provided at any interval in the rotation direction (Cr), and a plurality of the connection portions (72c, 72e) connected to the plurality of the abutment portions (72b, 72f) in the rotation direction (Cr) and provided with the widened portions (72g, 72h), and
the widened portion (72g) on the disc rotation-in side (28) of the plurality of widened portions (72g, 72h) is wider in the axial direction (W) than the widened portion (72h) on the disc rotation-out side (30).

4. The disc brake device (10) according to any one of claims 1 to 3, wherein
the widened portion (72g, 72h) is provided with any mark (80).
